# EUROPÄISCHE PATENTSCHRIFT

(11) **EP 3 535 163 B1**
(45) Veröffentlichungstag und Bekanntmachung des Hinweises auf die Patenterteilung: **09.12.2020**
(21) Anmeldenummer: 17797073.8
(22) Anmeldetag: 24.10.2017
(51) Int. Cl.: B60R 11/02, F16M 11/04, B60R 1/00

(54) **MONITOR EINES KAMERA-MONITOR-SYSTEMS**
MONITOR OF A CAMERA-MONITOR SYSTEM
MONITEUR D'UN SYSTÈME CAMÉRA-MONITEUR

(30) Priorität: 01.11.2016 DE 102016221434
(43) Veröffentlichungstag der Anmeldung: 11.09.2019
(73) Patentinhaber: Continental Automotive GmbH, 30165 Hannover (DE)
(72) Erfinder: SAUTTER, Silja, 78112 St. Georgen (DE); MIETHIG, Werner, 78086 Brigachtal (DE); NINGARAJU, Rajesh, Brundavana Nagar 560019 (IN); HÜGLE, Axel, 78120 Furtwangen (DE)
(86) Internationale Anmeldenummer: PCT/EP2017/077103
(87) Internationale Veröffentlichungsnummer: WO 2018/082965

(56) Entgegenhaltungen:
- KR-B1- 101 299 120
- US-A1- 2005 035 252
- US-A1- 2008 055 411

## Beschreibung

Die vorliegende Erfindung betrifft einen Monitor eines Kamera-Monitor-Systems in einem Kraftfahrzeug. Der Monitor ist dabei im Sichtbereich eines Fahrers des Kraftfahrzeugs angeordnet.

Aus der DE 10 2012 014 448 A1 ist ein Kamera-Monitor-System mit einem an der A-Säule eines Lkw fest angeordneten Monitors bekannt. Dieser wird bei der Montage optimal auf den Fahrer ausgerichtet, ist danach aber fixiert. Besonders große oder kleine Fahrer fallen bei der zur Montage vorgenommenen Optimierung auf einen mittleren Fahrer aus dem optimal eingestellten Bereich des Monitors heraus.

Die US 6,693,519 B2 zeigt ein Kamera-Monitor-System bei dem der Monitor mittels eines Kugelgelenks und Flügelmuttern verstellbar ist. Eine Verstellung erfordert beide Hände des Fahrers: Die eine Hand zum Betätigen der Flügelmuttern und die andere zum Ausrichten des Monitors. Nachteilig an beiden bekannten Lösungen ist, dass eine Verstellung des Monitors im Betrieb nicht oder nur aufwendig möglich ist.

Dokumente KR 101 299 120 B1, US 2008/055411 A1 und US 2005/035252 A1 betreffen jeweils einen höhenverstellbaren Monitor für ein Kraftfahrzeug. KR 101 299 120 B1 offenbart einen Monitor nach dem Oberbegriff von Anspruch 1.

Aufgabe der Erfindung ist es, einen demgegenüber verbesserten Monitor eines Kamera-Monitor-Systems vorzuschlagen. Gelöst wird diese Aufgabe durch die in den unabhängigen Ansprüchen angegebenen Merkmale.

Die Erfindung betrifft einen Monitor mit einem Halteelement gemäß Anspruch 1. Dier Monitor mit dem Halteelement für eines Kamera-Monitor-Systems in einem Kraftfahrzeug ist im Sichtbereich eines Fahrers des Kraftfahrzeugs anbringbar ist. Der Monitor ist vertikal höhenverstellbar, wobei der Monitor in einem ersten Zustand vertikal relativ zu dem Halteelement durch Kraftschluss gehalten ist. Der Kraftschluss ist zwischen dem Monitor und dem Halteelement ausgebildet. Der Monitor ist in einem zweiten Zustand relativ zu dem Halteelement vertikal verschiebbar. In dem zweiten Zustand ist der Kraftschluss zum Halten unterbrochen mittels einer horizontalen Verschiebung des Monitors relativ zu dem Halteelement.

Erfindungsgemäß ist vorgesehen, dass der Monitor höhenverstellbar ist. Dies hat den Vorteil, dass, je nach Fahrzeuggröße, der Monitor optimal auf den jeweiligen Fahrer eingestellt wird, so dass sowohl optimale Blickfelder in Fahrtrichtung als auch auf den Monitor, den digitalen Spiegel, gewährleistet werden.

Es ist vorgesehen, den höhenverstellbaren Monitor sowohl durch Kraftschluss, als auch durch Formschluss zu halten. Dies hat den Vorteil, dass der Monitor auch bei im Fahrbetrieb auftretenden Erschütterungen stabil in der eingestellten Höhe gehalten wird. Der Monitor ist dabei beispielsweise ein Flachbildschirm, eine Flüssigkristallanzeige LCD, ein TFT-Bildschirm, die Projektionsfläche einer Projektionseinheit oder ein anderer geeigneter Monitor. Der Formschluss wird vorzugsweise durch ineinandergreifende Zahnelemente wie Zahnstangen, Zahnstange und Zahnrad, Steckerelemente mit zugehörigen Buchsen und ähnlichem erzielt. Der Kraftschluss wird durch eine mechanische Feder, durch Fluiddruck, durch elastisch verformbares Material oder ähnliche Lösungen erzielt. Erfindungsgemäß ist vorgesehen, dass zum Kraftschluss zumindest eine Feder vorgesehen ist, und zum Formschluss ineinandergreifende Zahnstangen. Diese Elemente sind zuverlässig und kostengünstig.

Erfindungsgemäß weist der Monitor zumindest ein Gleitelement auf. Das Gleitelement ist in einer Gleitschiene eines Halteelements geführt und weist an einer ersten Längsseite eine Verzahnung auf. An seiner der ersten Längsseite gegenüberliegenden zweiten Längsseite schlägt es an eine Schiene an, die mittels Federn gegenüber dem Halteelement abgestützt ist. Das Halteelement weist eine Zahnstange auf, die der Verzahnung des Gleitelements gegenüberliegt und mit diesem zusammenwirkt. Die Gleitschiene ist in vertikaler Richtung im Gleitelement beweglich geführt. Die Verzahnung und die Zahnstange sind aufeinander abgestimmt, beispielsweise mit gerader oder schräger Verzahnung, mit symmetrischem oder unsymmetrischem Querschnitt, oder auf andere geeignete Weise. Eine feine Verzahnung ermöglicht eine Höhenverstellung in kleinen Schritten, erfordert aber eine höhere Federkraft zum sicheren

Halten. Eine grobe Verzahnung kommt mit geringerer Federkraft aus, ermöglicht aber nur eine grobe Rasterung der Höhenverstellung. Bei der vorgeschlagenen Lösung ist es möglich, durch äußere Kraft die Gleitschiene gegen die Federkraft horizontal zu verschieben, um dann eine vertikale Bewegung des Monitors auszuführen. Die äußere Kraft wirkt in horizontaler Richtung und hebt den durch die Federkraft hervorgerufenen Formschluss auf. Der Formschluss wird nach horizontaler Verstellung des Monitors und Beendigung der Kraftausübung in horizontaler Richtung wiederhergestellt.

Erfindungsgemäß ist vorgesehen, zwischen Gleitelement und Schiene ein Dämpfungselement anzuordnen. Dieses ist beispielsweise ein Gummiband welches vorzugsweise an der Schiene angeordnet ist. Das Dämpfungselement verhindert Geräusche bei der Höhenverstellung und dient zusätzlich der Geräuschdämpfung im Normalbetrieb.

Am unteren Ende der Schiene ist ein Dämpfungselement angeordnet, welches aus Kunststoff, Gummi, oder einem anderen geeigneten abfedernden Material besteht. Das Dämpfungselement dämpft den unteren Anschlag des Gleitelements ab, wenn dieses bei ausgeübter Kraft in horizontaler Richtung durch die Schwerkraft am unteren Ende der Gleitschiene angelangt ist.

Das Halteelement weist zumindest eines der folgenden Elemente auf: Ein Kabelführungselement dient zum Führen von den Monitor mit Energie, Bild- und anderen Informationen versorgenden elektrischen Leitungen, sowie von weiteren Leitungen und Kabeln. Ein Befestigungselement für ein Abdeckelement dient zu dessen Befestigung. Das Abdeckelement dient zum Sicht- und Staubschutz für die Monitorhalteeinrichtung. Ein Kabeldurchbruch zum Durchleiten der oben genannten Leitungen und Kabel ist ebenfalls vorgesehen. Zum Montieren des Halteelements an beispielsweise einer A-Säule eines Lkw in dessen Fahrerkabine, oder in einem PKW oder einem anderen Fahrzeug, ist eine Montageöffnung vorgesehen. Ein Befestigungselement dient zur horizontal beweglichen Befestigung der Schiene.

Die Schiene ist erfindungsgemäß horizontal verschiebbar mit dem Halteelement verbunden. Dies erfolgt entgegen der Vorspannung der Federn, um den Formschluss zu lösen bzw. wieder herzustellen.

Die Schiene weist erfindungsgemäß einen Vorsprung auf, der in eine Ausnehmung des Gleitelements eingreift. Dies verhindert das Herausfallen des Monitors in waagerechte Richtung.

Ein erfindungsgemäßes Verfahren zum Anpassen eines Monitors eines Kamera-Monitor-Systems weist die folgende Schritte auf: Druckausüben auf den Monitor in horizontaler Richtung. Lösen eines Kraftschlusses, der den Monitor in vertikaler Richtung fixiert. Verschieben des Monitors in vertikaler Richtung. Entlastung des Monitors in horizontaler Richtung. Dabei wird durch Einrasten der Kraftschluss wieder hergestellt.

Weitere Details und Vorteile der Erfindung sind der nachfolgenden Beschreibung von Ausführungsbeispielen anhand der Abbildungen zu entnehmen. Es zeigen:
- Fig. 1: Lkw mit erfindungsgemäßem Kamera-Monitor-System,
- Fig. 2: Erfindungsgemäßer Monitor mit Halteelement in räumlicher Darstellung,
- Fig. 3: Erfindungsgemäßer Monitor mit Halteelement in Draufsicht,
- Fig. 4: Halteelement eines erfindungsgemäßen Monitors.

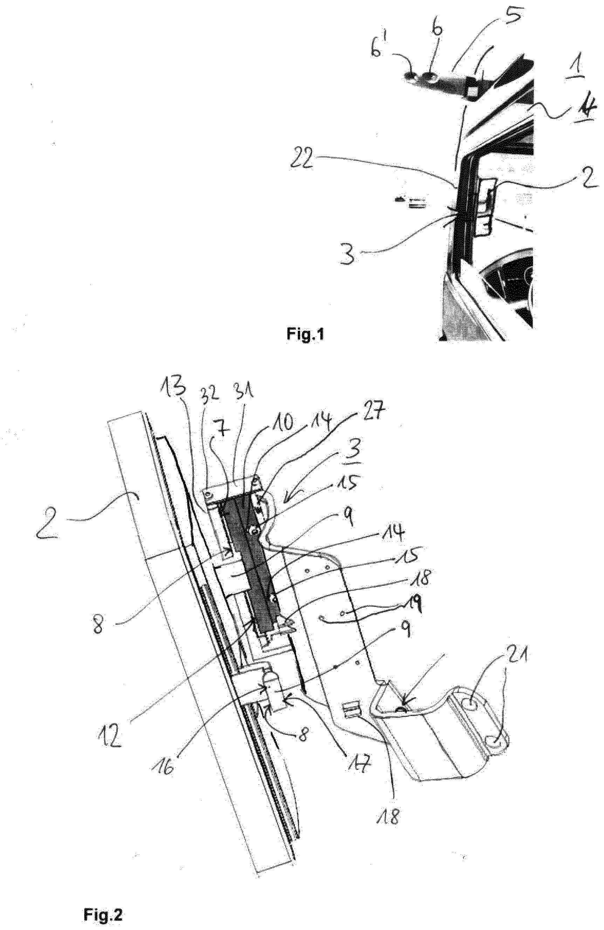

Fig. 1 zeigt die Fahrerkabine eines Lkw, des Kraftfahrzeugs 1, mit einem erfindungsgemäßen Monitor 2. Der Monitor 2 ist mittels eines Halteelements 3 höhenverstellbar an der A-Säule 22 des Kraftfahrzeugs 1 angebracht. Am oberen Ende der Fahrerkabine 4 des Kraftfahrzeugs 1 ist ein Kamerahalter 5 mit zwei Kameras 6, 6' angeordnet. Die außen am Kraftfahrzeug 1 angeordneten Kameras 6,6' übertragen, nach geeigneter Verarbeitung, ein dem Rückspiegel eines üblichen Kraftfahrzeugs entsprechendes Bild auf den Monitor 2. Dabei wird das eine Kamerabild in der oberen Hälfte des Monitors 2 dargestellt, das andere in dessen unterer Hälfte. Durch Druckausübung in horizontaler Richtung auf den Monitor 2 wird dessen Befestigung in vertikaler Richtung gelöst, er kann vertikal verschoben werden, und rastet nach Beendigung des Drucks in der neu eingestellten Vertikalposition ein.

Fig. 2 zeigt einen erfindungsgemäßen Monitor 2 mit Halteelement 3 in räumlicher Darstellung. Eine am Halteelement 3 angeordnete Zahnstange 7 greift in eine entsprechende Verzahnung 8 eines Gleitelements 9 des Monitors 2 ein. Eine Schiene 10 des Halteelements 3 ist mittels Federn 27 gegen das Gleitelement 9 und die Zahnstange 7 vorgespannt. Man erkennt, dass der Monitor 2 hochkant angeordnet ist, und zu beiden Seiten ein Gleitelement 9 aufweist. Das in der Abbildung vordere Gleitelement 9 ist in einem hier nicht dargestellten weiteren Halteelement gehalten. Das in der Abbildung hintere Gleitelement 9 ist in einer Gleitschiene 12 in vertikaler Richtung beweglich geführt. Beide Gleitelemente 9 weisen im Wesentlichen die gleichen Eigenschaften auf und sind spiegelbildlich zueinander. Die Beschreibung des einen trifft entsprechend auf das andere zu. Die Gleitschiene 12 wird durch einen mit der Zahnstange 7 verbunden Führungsbereich 13 des Halteelements 3 und die Schiene 10 gebildet. Die Schiene 10 weist Langlöcher 14 auf, durch die Schrauben 15 zum Befestigen der Schiene 10 am Führungsbereich 13 hindurchragen. Die Verzahnung 8 ist an einer ersten Längsseite 16 des Gleitelements 9 angeordnet, deren zweite Längsseite 17 an der Schiene 10 anschlägt. Das Halteelement 3 weist weiterhin Kabelführungselemente 18 auf, die zum Führen von Kabeln dienen, die den Monitor mit anderen Einrichtungen des Kraftfahrzeugs 1 verbinden, beispielsweise elektrisch leitend, lichtleitend oder rein mechanisch. Ein hier nicht dargestelltes Abdeckelement zum Sicht- und Staubschutz des Halteelements 3 wird mittels Befestigungselementen 19 befestigt. Ein Kabeldurchbruch 20 dient zum Durchleiten der oben genannten Kabel. Montageöffnungen 21 dienen zum Befestigen des Halteelements 3 an der A-Säule 22 des Kraftfahrzeugs 1.

Am oberen Ende der Gleitschiene 12 ist eine Abdeckplatte 31 mittels Schrauben 32 befestigt. Dies verhindert ein Herausschieben der Gleitelemente 9 nach oben und somit ein Herausfallen des Monitors 2.

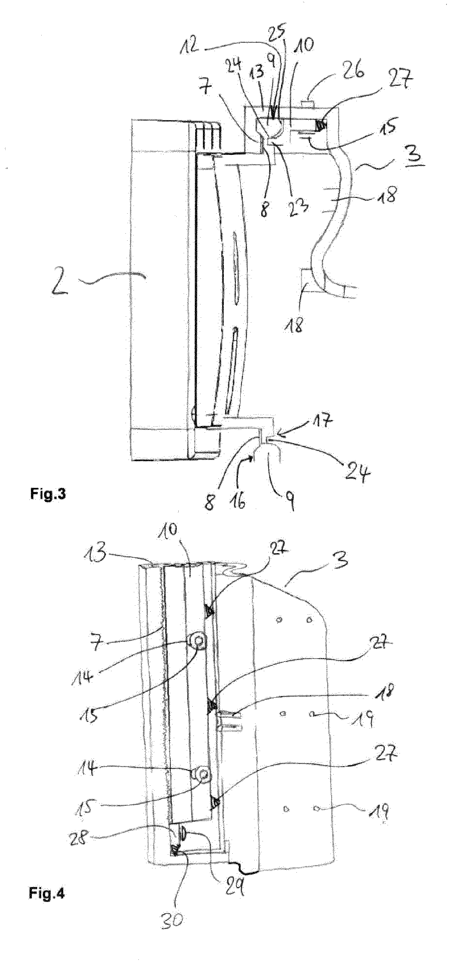

Fig. 3 zeigt den erfindungsgemäßen Monitor 2 aus Fig. 2 in Draufsicht. Man erkennt das Gleitelement 9 mit Verzahnung 8 an dessen erster Längsseite 16. Die Verzahnung 8 greift in Zähne der Zahnstange 7 des Halteelements 3 ein. Die zweite Längsseite 17 des Gleitelements 9 schlägt an der Schiene 10 an. Dabei greift ein Vorsprung 23 der Schiene 10 in eine Ausnehmung 24 des Gleitelements 9 ein. Dies verhindert ein Herausfallen des Monitors 2 in horizontaler Richtung, in der Abbildung in Richtung unten. Zwischen Schiene 10 und Gleitelement 9 ist ein Dämpfungselement 25 angeordnet. Dieses ist an der Schiene 10 befestigt und erstreckt sich über deren gesamte Länge. Das Dämpfungselement 25 ist als Gummiband oder als Schaumstoffband ausgebildet.

Die Schiene 10 ist mittels einer Schraube 15 am Halteelement 3 befestigt. Die Schraube 15 greift in ein Befestigungselement 26 des Halteelements 3 ein. Da die Schraube 15 in einem Langloch 14, hier nicht dargestellt, der Schiene 10 angeordnet ist, ist die Schiene 10 in horizontaler Richtung beweglich, in der Abbildung nach rechts bzw. links. Wird auf den Monitor 2 von links eine nach rechts gerichtete Kraft ausgeübt, so verschiebt sich die Schiene 10 und drückt die Feder 27 zusammen. Dabei löst sich die Verzahnung 8 von der Zahnstange 7, das Gleitelement 9 kann nun in vertikaler Richtung, also aus der Ebene der Fig. 3 nach oben und unten hinaus, verschoben werden. Ist die gewünschte vertikale Position erreicht, wird die Druckausübung auf den Monitor 2 beendet. Die Kraft der Feder 27 schiebt dann die Schiene 10 und damit das Gleitelement 9 nach links, wodurch Verzahnung 8 und Zahnstange 7 wieder in Eingriff kommen. Der Monitor 2 ist damit durch Formschluss und Kraftschluss in seiner vertikalen Position fixiert.

Der Führungsbereich 13 befindet sich am, in der Abbildung oben dargestellten, äußeren Ende des Halteelements 3. Am Führungsbereich 13 ist die Zahnstange 7 angeordnet.

Fig. 4 zeigt das Halteelement 3 eines erfindungsgemäßen Monitors 2 ohne Monitor. Man erkennt den Führungsbereich 13 mit angeordneter Zahnstange 7. Am rechten Ende des Führungsbereichs 13 ist die Schiene 10 mittels Schrauben 15 am Halteelement 3 befestigt. Die Schrauben 15 sind durch Langlöcher 14 geführt. Konische Federn 27 stützen die Schiene 10 gegen das Halteelement 3 ab.

Die Befestigungselemente 19 können zusätzlich oder alternativ zur Befestigung eines Abdeckelements auch zur Befestigung eines weiteren Halteelements 3 dienen, welches in das in Fig. 2 dem Betrachter zugewandte Gleitelement 9 eingreift.

Am unteren Ende des Halteelements 3, unterhalb der Zahnstange 7, ist ein Dämpfungselement 28 angeordnet, welches mittels einer Schraube 29 am Halteelement 3 befestigt ist. Die Schraube 29 durchgreift ein Langloch, hier nicht dargestellt, welches sich in vertikaler Richtung erstreckt. Das Dämpfungselement 28 ist nach unten mittels einer Feder 30 abgestützt. Bewegt sich der Monitor 2, und damit das Gleitelement 9 in der Gleitschiene 12 nach unten, so schlägt es gegen das Dämpfungselement 28 an und wird über die Feder 30 abgedämpft abgebremst. Dies verhindert ein plötzliches Abbremsen und somit eine Beschädigung des Monitors 2 beim Erreichen des unteren Anschlags .

In anderen Worten betrifft die Erfindung einen Monitor 2, der als Ersatz für herkömmliche Fahrzeugspiegel dient. Üblicherweise werden die traditionellen Fahrzeugspiegel "starr" am Fahrzeugverbaut. Auch im Fahrzeug 1 werden bisher die Monitore 2, auch Displays genannt, starr verbaut. Starr verbaute Displays haben für Fahrer die besonders groß oder besonders klein sind deutliche Nachteile in der Erkennung der Fahrsituation, da Displays durch Beleuchtung und Einblickwinkel für diese Personen mitunter relativ unscharfe Bilder darstellen. Auch für Fahrer mit Gleitsichtbrillen ist dies ein Problem mit der Adaption zwischen Display "NAH", und Fahrsituation "WEIT". Die Erfindung liefert für oben genannten Personenkreis eine optimale Lösung durch eine Höhenverstellbarkeit des Displays eines sogenannten Digitalen Spiegels.

Durch zwei Zahnstangen 7, 8, die federnd gelagert sind, wird das Display mit einem metallischen "Klammeraufbau" in Position gehalten. Da hier sowohl ein Kraftschluss über die Federn 27 als auch Formschluss über die Zahnstange 7 und die Verzahnung 8 vorhanden ist, ist das Prinzip gegen Vibration doppelt gesichert. Möchte der Fahrer die Höhe des Displays verstellen, drückt er von vorne auf den Monitor 2 gegen die Federkraft der Federn 27. Somit wird der Monitor 2 aus der Zahnstange 7 ausgekoppelt und kann nach oben oder unten im gedrückten Zustand verschoben werden. Der Fahrer lässt dann in der gewünschten Position den Monitor 2 los und dieser schnappt dann wieder in die Zahnstange 7 via Federkraft ein. Wenn die Position noch nicht optimal sein sollte, kann der Vorgang beliebig oft wiederholt werden. Je nach Fahrergröße kann der Monitor 2 auf diese Weise optimal auf den jeweiligen Fahrer eingestellt werden, so dass sowohl optimale Blickfelder in Fahrrichtung als auch auf den Monitor 2 gewährleistet wird.

Es liegt im Ermessen des Fachmanns, die oben beschriebene Ausführungsform abzuwandeln oder geeignet zu ergänzen.

## Patentansprüche

1. Monitor (2) mit einem Halteelement (3) für ein Kamera-Monitor-System in einem Kraftfahrzeug (1), der im Sichtbereich eines Fahrers des Kraftfahrzeugs (1) anbringbar ist, **dadurch gekennzeichnet, dass** der Monitor (2) vertikal höhenverstellbar ist, wobei der Monitor (2) in einem ersten Zustand vertikal relativ zu dem Halteelement (3) durch Kraftschluss zwischen dem Monitor (2) und dem Halteelement (3) gehalten ist, und der Monitor (2) in einem zweiten Zustand relativ zu dem Halteelement (3) vertikal verschiebbar ist, wobei in dem zweiten Zustand der Kraftschluss zum Halten unterbrochen ist mittels einer horizontalen Verschiebung des Monitors (2) relativ zu dem Halteelement (3).

2. Monitor (2) nach Anspruch 1, **dadurch gekennzeichnet, dass** der höhenverstellbare Monitor (2) sowohl durch Kraftschluss als auch durch Formschluss gehalten ist.

3. Monitor (2) nach einem der vorhergehenden Ansprüche, **dadurch gekennzeichnet, dass** zum Kraftschluss zumindest eine Feder (27) vorgesehen ist, und zum Formschluss ineinandergreifende Zahnstange (7) und Verzahnung (8).

4. Monitor (2) nach einem der vorhergehenden Ansprüche, **dadurch gekennzeichnet, dass** der Monitor (2) zumindest ein Gleitelement (9) aufweist, das in einer Gleitschiene (12) eines Halteelements (3) geführt ist und das an einer ersten Längsseite (16) eine Verzahnung (8) aufweist, und an ihre der ersten Längsseite (16) gegenüberliegenden zweiten Längsseite (17) an eine Schiene (10) anschlägt, die mittels Federn (27) gegenüber dem Halteelement (3) abgestützt ist, wobei das Halteelement (3) eine Zahnstange (7) aufweist, die der Verzahnung (8) des Gleitelements (9) gegenüberliegt.

5. Monitor (2) nach einem der vorhergehenden Ansprüche, **dadurch gekennzeichnet, dass** zwischen Schiene (10) und Gleitelement (9) ein Dämpfungselement (25) angeordnet ist.

6. Monitor (2) nach einem der vorhergehenden Ansprüche, **dadurch gekennzeichnet, dass** am unteren Ende der Schiene (10) ein Dämpfungselement (28) angeordnet ist.

7. Monitor (2) nach einem der vorhergehenden Ansprüche, **dadurch gekennzeichnet, dass** das Halteelement (3) zumindest eines der Elemente
- Kabelführungselement (18),
- Befestigungselement (19) für ein Abdeckelement,
- Kabeldurchbruch (20)
- Montageöffnung (21),
- Befestigungselement (26) für die Schiene (10) aufweist.

8. Monitor (2) nach einem der vorhergehenden Ansprüche, **dadurch gekennzeichnet, dass** die Schiene (10) horizontal verschiebbar mit dem Halteelement (3) verbunden ist.

9. Monitor (2) nach einem der vorhergehenden Ansprüche, **dadurch gekennzeichnet, dass** die Schiene (10) einen Vorsprung (23) aufweist, der in eine Ausnehmung (24) des Gleitelements (9) eingreift.

10. Anpassungsverfahren eines Monitors (2) eines Kamera-Monitor-Systems nach einem der vorhergehenden Ansprüche, aufweisend die Schritte
- Druckausüben auf den Monitor (2) in horizontaler Richtung,
- dabei Lösen eines den Monitor (2) in vertikaler Richtung fixierenden Kraftschlusses,
- Verschieben des Monitors (2) in vertikaler Richtung,
- Druckentlastung des Monitors (2) in horizontaler Richtung, und
- dabei Einrasten und Wiederherstellen des Kraftschlusses.

## Claims

1. Monitor (2) with a holding element (3) for a camera-monitor system in a motor vehicle (1), which monitor can be mounted in the field of vision of a driver of the motor vehicle (1), **characterized in that** the monitor (2) is height-adjustable vertically, wherein the monitor (2) in a first state is held vertically relative to the holding element (3) by a force fit between the monitor (2) and the holding element (3), and the monitor (2) in a second state is displaceably vertically relative to the holding element (3), wherein, in the second state, the force fit for the holding is interrupted by means of a horizontal displacement of the monitor (2) relative to the holding element (3).

2. Monitor (2) according to Claim 1, **characterized in that** the height-adjustable monitor (2) is held both by a force fit and by a form fit.

3. Monitor (2) according to either of the preceding claims, **characterized in that** at least one spring (27) is provided for the force fit, and an intermeshing rack (7) and toothing (8) for the form fit.

4. Monitor (2) according to one of the preceding claims, **characterized in that** the monitor (2) has at least one sliding element (9) which is guided in a slide rail (12) of a holding element (3) and which has a toothing (8) on a first longitudinal side (16), and, on its second longitudinal side (17) lying opposite the first longitudinal side (16), strikes against a rail (10) which is supported in relation to the holding element (3) by means of springs (27), wherein the holding element (3) has a rack (7) which lies opposite the toothing (8) of the sliding element (9).

5. Monitor (2) according to one of the preceding claims, **characterized in that** a damping element (25) is arranged between rail (10) and sliding element (9).

6. Monitor (2) according to one of the preceding claims, **characterized in that** a damping element (28) is arranged at the lower end of the rail (10).

7. Monitor (2) according to one of the preceding claims, **characterized in that** the holding element (3) has at least one of the following elements
- a cable guiding element (18),
- a fastening element (19) for a covering element,
- a cable feedthrough (20),
- an installation opening (21),
- a fastening element (26) for the rail (10).

8. Monitor (2) according to one of the preceding claims, **characterized in that** the rail (10) is connected in a horizontally displaceable manner to the holding element (3) .

9. Monitor (2) according to one of the preceding claims, **characterized in that** the rail (10) has a projection (23) which engages in a recess (24) of the sliding element (9).

10. Adaption method of a monitor (2) of a camera-monitor system according to one of the preceding claims, having the following steps
- exerting pressure on the monitor (2) in the horizontal direction,
- in the process releasing a force fit fixing the monitor (2) in the vertical direction,
- displacing the monitor (2) in the vertical direction,
- relieving pressure on the monitor (2) in the horizontal direction, and
- latching and reproducing the force fit.

## Revendications

1. Moniteur (2) pourvu d'un élément de retenue (3) destiné à un système de moniteur et de caméra dans un véhicule automobile (1) et pouvant être fixé dans le champ de vision d'un conducteur du véhicule automobile (1), **caractérisé en ce que** le moniteur (2) est réglable en hauteur verticalement, le moniteur (2) étant maintenu verticalement par rapport à l'élément de retenue (3) dans un premier état par une liaison en force entre le moniteur (2) et l'élément de retenue (3), et le moniteur (2) pouvant coulisser verticalement dans un deuxième état par rapport à l'élément de retenue (3), la liaison en force destinée au maintien étant interrompue dans le deuxième état par un coulissement horizontal du moniteur (2) par rapport à l'élément de retenue (3).

2. Moniteur (2) selon la revendication 1, **caractérisé en ce que** le moniteur (2) réglable en hauteur est maintenu à la fois par une liaison en force et par une liaison par complémentarité de formes.

3. Moniteur (2) selon l'une des revendications précédentes, **caractérisé en ce qu'**au moins un ressort (27) est prévu pour la liaison en force et une crémaillère (7) et une denture (8) s'engrenant l'une dans l'autre sont prévues pour la liaison par complémentarité de formes.

4. Moniteur (2) selon l'une des revendications précédentes, **caractérisé en ce que** le moniteur (2) comporte au moins un élément coulissant (9) qui est guidé dans une glissière (12) d'un élément de retenue (3) et qui comporte une denture (8) sur un premier côté longitudinal (16) et, sur son deuxième côté longitudinal (17) opposé au premier côté longitudinal (16), vient en butée contre un rail (10) qui est supporté au moyen de ressorts (27) contre l'élément de retenue (3), l'élément de retenue (3) comportant une crémaillère (7) qui est opposée à la denture (8) de l'élément coulissant (9).

5. Moniteur (2) selon l'une des revendications précédentes, **caractérisé en ce qu'**un élément d'amortissement (25) est disposé entre le rail (10) et l'élément coulissant (9).

6. Moniteur (2) selon l'une des revendications précédentes, **caractérisé en ce qu'**un élément d'amortissement (28) est disposé à l'extrémité inférieure du rail (10).

7. Moniteur (2) selon l'une des revendications précédentes, **caractérisé en ce que** l'élément de retenue (3) comporte l'un au moins des éléments suivants
- un élément de guidage de câble (18),
- un élément de fixation (19) destiné à un élément de recouvrement,
- un passage de câble (20)
- une ouverture de montage (21),
- un élément de fixation (26) destiné au rail (10).

8. Moniteur (2) selon l'une des revendications précédentes, **caractérisé en ce que** le rail (10) est relié à l'élément de retenue (3) de manière à pouvoir coulisser horizontalement.

9. Moniteur (2) selon l'une des revendications précédentes, **caractérisé en ce que** le rail (10) comporte une saillie (23) qui s'engage dans un évidement (24) de l'élément coulissant (9) .

10. Procédé d'adaptation d'un moniteur (2) d'un système de moniteur et de caméra selon l'une des revendications précédentes, comprenant les étapes suivantes
- exercer une pression sur le moniteur (2) dans la direction horizontale,
- libérer alors une liaison en force qui fixe le moniteur (2) dans la direction verticale,
- faire coulisser le moniteur (2) dans la direction verticale,
- relâcher la pression exercée sur le moniteur (2) dans la direction horizontale, et
- engager et restaurer alors la liaison en force.
